# EUROPÄISCHE PATENTSCHRIFT

(11) **EP 1 654 150 B1**
(45) Veröffentlichungstag und Bekanntmachung des Hinweises auf die Patenterteilung: **07.10.2009**
(21) Anmeldenummer: 04763776.4
(22) Anmeldetag: 04.08.2004
(51) Int. Cl.: B62D 27/02, B62D 23/00

(54) **KNOTENSTRUKTUR ZUR VERBINDUNG VON ZWEI PROFILEN IN EINEM FAHRZEUGTRAGRAHMEN**
JUNCTION STRUCTURE FOR CONNECTING TWO PROFILES IN A VEHICLE SUPPORT FRAME
STRUCTURE DE NOEUD POUR RELIER DEUX PROFILES DANS UN CADRE PORTEUR DE VEHICULE

(30) Priorität: 13.08.2003 DE 10337151
(43) Veröffentlichungstag der Anmeldung: 10.05.2006
(73) Patentinhaber: ThyssenKrupp Steel AG, 47166 Duisburg (DE)
(72) Erfinder: GRÜNEKLEE, Axel, 47259 Duisburg (DE); PATBERG, Lothar, 47445 Moers (DE)
(74) Vertreter: Cohausz & Florack
(86) Internationale Anmeldenummer: PCT/EP2004/008725
(87) Internationale Veröffentlichungsnummer: WO 2005/019015

(56) Entgegenhaltungen:
- WO-A1-95/20081
- WO-A1-03/045767
- FR-A1- 2 785 972
- US-B1- 6 402 414

## Beschreibung

Die Erfindung betrifft eine Knotenstruktur zur Verbindung von zwei Profilen, insbesondere in einem Fahrzeugtragrahmen, von denen das erste Profil mindestens zwei ebene, parallele Seiten aufweist und das zweite Profil aus zwei parallelen, sich gegenüberliegenden Gurten und mindestens einem die Gurte verbindenden Steg besteht, wobei die Gurte mit ihren seitlichen Enden gegenüber dem Steg überstehen und mit diesen Überständen paarweise parallele Flansche bilden, und wobei das erste Profil am Ort der Verbindung eine Aussparung aufweist, in die das zweite Profil stirnseitig derart eingesteckt ist, dass die parallelen Seiten der sich gegenüberliegenden, die Aussparung begrenzenden Enden des ersten Profils formschlüssig an den Innenseiten der sich gegenüberliegenden Flasche des zweite Profils anliegen und mit diesen verbunden sind.

Seit einigen Jahren werden besonders im Fahrzeugbau vor dem Hintergrund neuer Leichtbaukonzepte wieder verstärkt Hohlprofile, d.h. Profile mit geschlossenem Querschnitt, eingesetzt. Dabei bieten insbesondere solche Hohlprofile, die aus hoch- und höchstfesten Stahlwerkstoffen gefertigt sind, ein hohes Gewichtseinsparungspotential. Eine zentrale Problemstellung beim Einsatz von Hohlprofilen ist deren Anbindung untereinander über Verbindungsknoten.

Knotenstrukturen zur Verbindung von Profilen, insbesondere von Hohlprofilen, sind seit langem bekannt. So ist in der europäischen Patentschrift EP 0 568 251 B1 eine T-förmige Knotenstruktur zur Anbindung eines als Hohlprofil mit rechteckigem Querschnitt ausgebildeten Querträgers an die Seitenschweller beschrieben. Gemäß einer Ausführungsform eines solchen T-Knotens ist der Querträger an seinem einen Ende längs aufgetrennt und derart aufgebogen, daß zwei um jeweils 90° umgebogene, zueinander fluchtend angeordnete Abschnitte mit C-förmigem Querschnitt entstehen, an die der Seitenschweller angelegt und mit diesen verschweißt wird. Dadurch lässt sich zwar eine Knotenstruktur mit einer großen Anbindungszone und damit verbundener hoher Steifigkeit realisieren, die zudem einen Toleranzausgleich in Fahrzeuglängsrichtung ermöglicht, jedoch ist dies mit vergleichsweise hohem fertigungstechnischen Aufwand aufgrund der jeweils vorzunehmenden Einzelbearbeitung des Querträgerendes verbunden. Zudem kann es bei einem Frontal- oder Heckaufprall, d.h. bei einer Krafteinleitung in den Fahrzeugrahmen in Längsrichtung, zu einem Aufreißen der Schweißnaht kommen, wodurch die Verbindung zwischen Querträger und Seitenschweller vollständig gelöst wird und der Fahrzeugtragrahmen in erheblichem Maße an Steifigkeit verliert.

Eine in der DE 196 53 509 A1 beschriebene Knotenstruktur in einem Fahrzeugtragrahmen basiert auf einem aus Stahlblech durch Innenhochdruckumformen (IHU) hergestellten Knotenelement mit wenigstens zwei Anschlußstutzen. Auf die Anschlußstutzen werden die zu verbindenden Hohlprofile aufgesteckt und mittels Schweißen oder Kleben fixiert. Dies ermöglicht zwar die präzise Verbindung zweier oder mehrerer Profile, wobei ein gewisser Toleranzausgleich durch eine begrenzt variable Aufstecktiefe möglich ist. Die Herstellung eines solchen Knotenelementes ist jedoch nur in Einzelfertigung möglich und wegen der IHU-Technologie sehr aufwendig.

Aus der Praxis ist schließlich eine Knotenstruktur zur Verbindung zweier Profile gemäß dem Oberbegriff bekannt, bei welcher der bzw. die die Gurte verbindenden Stege des zweiten Profils gegenüber den Gurten längs beschnitten sind, so dass die dadurch entstehenden stirnseitigen Überstände der Gurte das im rechten Winkel angelegte erste Profil formschlüssig umschließen. Diese mittels einer Schweißverbindung fixierte Knotenstruktur zeichnet sich ebenfalls durch eine hohe Steifigkeit aus. Bei geringer Wandstärke und gleichzeitig großen Profilquerschnitten kann es jedoch unter Belastung zu Wölbeffekten bzw. zu einer Tordierung des in der Regel als Längsträger ausgebildeten ersten Profils kommen, wodurch die Steifigkeit der Knotenstruktur erheblich reduziert wird. Des weiteren hat der stirnseitige Beschnitt des zweiten Profils zur Folge, dass dieses infolge der vorzunehmenden Zwischenbearbeitung nicht einer kontinuierlichen Profilfertigung entnommen werden kann, was zu erhöhten Kosten führt. Alternativ zum nachträglichen Beschnitt kann das zweite Profil auch einzeln gefertigt werden, was jedoch ebenfalls mit hohen Kosten verbunden ist.

Bei einer bekannten Knotenstruktur der eingangs genannten Art (WO 03/045767 A1) besteht das erste Profil aus zwei miteinander fluchtenden Abschnitten, die mit Abstand voneinander angeordnet sind und somit eine "Aussparung" bilden, in der das zweite Profil angeordnet ist. Die beiden Abschnitte des ersten Profils sind nur über das zweite Profil miteinander verbunden. Eine hohe Steifigkeit insbesondere bei einer axialen Belastung des zweiten Profils in Richtung der Aussparung ist nicht gegeben.

Der Erfindung liegt daher die Aufgabe zugrunde, eine Knotenstruktur der eingangs genannten Art zu schaffen, welche eine hochsteife Verbindung der Profile ermöglicht, wobei ein Toleranzausgleich der Profile ebenso gewährleistet sein sollte, wie die Möglichkeit, Profile direkt aus einem kontinuierlichen Fertigungsprozess einzusetzen.

Die Aufgabe wird erfindungsgemäß mit einer Knotenstruktur gemäß dem Oberbegriff gelöst, indem das erste Profil im Bereich seiner Aussparung an seiner der Stirnseite des eingesteckten zweiten Profils zugewandten Seite einen Verbindungssteg aufweist, wobei der Verbindungssteg die sich gegenüberliegenden, die Aussparung begrenzenden Enden des ersten Profils miteinander verbindet.
Die erfindungsgemäße Knotenstruktur ist einfach gestaltet und damit ohne großen fertigungstechnischen Aufwand herzustellen. Besonders vorteilhaft ist, dass das zweite Profil direkt einer kontinuierlichen Fertigung entnommen werden kann und lediglich nach Maßgabe des Anwenders abgelängt werden muss. Da das zweite Profil in eine im ersten Profil in dessen Seitenwänden vorgesehene Aussparung eingesteckt ist, wird ein Verbindungsknoten mit besonders hoher Steifigkeit geschaffen. Der eingesteckte Abschnitt des oder der Stege wirkt bei einer Längsbelastung des ersten Profils als Schottblech und steift somit den Knoten aus. Hierdurch wird sowohl eine Querschnittsveränderung der Profile bei starker Beanspruchung unterdrückt als auch deren Tordierung im Knotenbereich wirksam verhindert. Ein Toleranzausg leich der Profile ist in zwei Dimensionen möglich. In Längsrichtung des ersten Profils ist dies realisierbar durch eine Variation der Breite der Aussparung sowie durch eine Variation der Lage des eingesteckten zweiten Profils senkrecht zur Einsteckrichtung, so dass die Enden des ersten Profils in unterschiedlichem Abstand zu dem oder den Stegen des zweiten Profils angeordnet sind. Andererseits lässt sich auch ein Toleranzausgleich in Längsrichtung des zweiten Profils realisieren, nämlich durch eine Variation der Einstecktiefe des zweiten Profils in die im ersten Profil vorgesehene Aussparung. Die Knotenstruktur ist durch den verbleibenden Verbindungssteg auch bei einer starken Belastung des zweiten Profils in seiner Längsrichtung, beispielsweise bei einem Seitenaufprall, besonders effektiv gesichert.

Der Verbindungssteg lässt sich auf verschiedene Art und Weise realisieren. Nach einer ersten Ausgestaltung weist bei am Ort der Aussparung vollständig durchtrennten ersten Profils das eine Ende des ersten Profils einen den Verbindungssteg bildenden Überstand auf, über den dieses eine Ende mit dem anderen Ende des ersten Profils verbunden ist. In dieser Konfiguration kann ein Toleranzausgleich in Längsrichtung des ersten Profils vorgenommen werden. Nach einer anderen alternativen Ausführungsform der erfindungsgemäßen Knotenstruktur ist vorgesehen, dass das erste Profil am Ort der Aussparung unter Bildung des Verbindungssteges bis auf die der Stirnseite des zweiten Profils zugewandte Seite durchtrennt ist. Das erste Profil weist somit im Unterschied zu der vorstehend beschriebenen Ausführungsform eine.durchgehende Faser auf, wodurch die Dauerfestigkeit der Knotenstruktur erhöht wird.

Gemäß einer weiteren vorteilhaften Ausgestaltung der Erfindung weist das zweite Profil zwei Stege auf, von denen der eine längs beschnitten ist.

Vorzugsweise ist das zweite Profil ein DAVEX-Profil. DAVEX-Profile weisen fertigungsbedingt bereits die erforderliche Querschnittgeometrie mit den seitlich nach außen überstehenden parallelen Flanschen auf. Das Dickenverhältnis zwischen den Gurten und dem oder den Stegen lässt sich entsprechend dem Belastungsprofil der späteren Anwendung leicht einstellen. Im Unterschied beispielsweise zu einem Strangpressprofil lassen sich DAVEX-Profile problemlos aus hochfesten oder höchstfesten Stahlwerkstoffen fertigen. Dabei ist ebenso die Verwendung jeweils verschiedener Werkstoffe für die Gurte und den bzw. die Stege möglich, so dass die im Betrieb möglicherweise besonders belasteten Gurte aus einem hochfesten Werkstoff, der geringer belasteten Stege aus einem kostengünstigen Werkstoff gefertigt sein können.

Zweckmäßig.erweise sind die Profile durch Schweißen miteinander verbunden. Als konkrete Ausgestaltung dieser Schweißverbindung bietet sich eine Linienschweißnaht an, durch welche die äußeren Ränder der parallelen Flansche des zweiten Profils mit den formschlüssig anliegenden Seiten des ersten Profils verbunden sind. Durch eine solche Linienschweißnaht wird eine langgestreckte Fügelinie erreicht, welche zusätzlich zur hohen Steifigkeit der Knotenstruktur beiträgt.

Besonders vorteilhaft ist der Einsatz der erfindungsgemäßen Knotenstruktur als Verbindungsknoten von Profilelementen in einem Fahrzeugtragrahmen. Dabei ist zweckmäßigerweise das erste Profil als Fahrzeuglängsträger, insbesondere als hinterer Fahrzeuglängsträger, und das zweite Profil als Fahrzeugquerträger ausgebildet. Die Gurte des zweiten Profils bieten mit ihren nach außen weisenden Flanschen eine geeignete Anlagefläche beispielsweise für Elemente des Fahrzeugbodens.

Im Falle eines Heckaufpralls, bei dem eine große Kraft stirnseitig in den hinteren Längsträger eingeleitet wird, verliert der Knoten aufgrund der in das erste Profil hineinragenden und die Profilenden abschottenden Stege auch dann nicht seine Stabilität, wenn es zu einem Reißen der Schweißnähte kommt.

Neben einem Einsatz im Tragrahmen von Personenkräftfahrzeugen ist die erfindungsgemäße Knotenstruktur insbesondere auch für einen Einsatz in Omnibussen, Nutz- und Schienenfahrzeugen geeignet, da diese meist über einen Leiterrahmen als Grundstruktur verfügen.

Handelt es sich bei dem zweiten Profil um ein DAVEX-Profil, so eignet sich dieses insbesondere als Fahrzeugsitzträger, d. h. als Querträger auf welchen Fahrzeugsitze - in einem Personenfahrzeug oder einem Omnibus - aufschraubbar sind. Hierbei wird ausgenutzt, dass eine senkrecht auf die Gurtoberfläche wirkende Beanspruchung beilspielsweise durch eine im Fahrzeug sitzende Person besonders gut von dem DAVEX-Profil aufgenommen werden kann.

Im Einzelnen ist bei dieser insbesondere bei DAVEX-Profilen bevorzugt gewählten Konfiguration mit zwei Stegen der eine Steg soweit längsbeschnitten, dass die Aussparung im ersten Profil wesentlich kleiner gewählt werden kann und somit die sich gegenüber liegenden Enden des ersten Profils in wesentlich geringerem Abstand zueinander gelagert sind. Zwar ist dies mit einem höheren Gewicht der Knotenstruktur und einem zusätzlichen Arbeitsschritt (Beschnitt) bei der Vorbereitung des zweiten Profils verbunden, jedoch kann somit die Steifigkeit der Knotenstruktur weiter erheblich gesteigert werden. Folglich ist diese Ausführungsform besonders für weniger gewichtssensitive, aber dafür umso mehr mit dauerhaft hohen Belastungen verbundene Anwendungen, beispielsweise im Nutzfahrzeug- oder Schienenfahrzeugbereich, geeignet.

Schließlich kann die hohe Steifigkeit der erfindungsgemäßen Knotenstruktur, insbesondere ihre Torsionsfestigkeit, noch weiter gesteigert werden, indem sie zusätzlich mit Schalenelementen eingefasst ist. Dabei können die Schalenelemente als Tiefzieh- oder Kantbauteile ausgebildet sein.

Im folgenden wird die Erfindung anhand einer Ausführungsbeispiele darstellenden Zeichnung näher erläutert. Es zeigen:
- Fig. 1: eine Knotenstruktur zur Verbindung von zwei Profilen, bei der das erste Profil bis auf einen Verbindungssteg durchtrennt ist, in perspektivischer Ansicht,
- Fig. 2: die Knotenstruktur der Fig. 1 in einer abgewandelten Ausführung, bei der das erste Profil vollständig durchtrennt ist, in perspektivischer Ansicht
- Fig. 3: die Knotenstruktur der Fig. 1 in einer weiteren abgewandelten Ausführung mit beschnittenem zweiten Profil in Draufsicht,
- Fig. 4: die Knotenstruktur der Fig. 3 im seitlichen Schnitt entlang der Zinke I-I der Fig. 3.

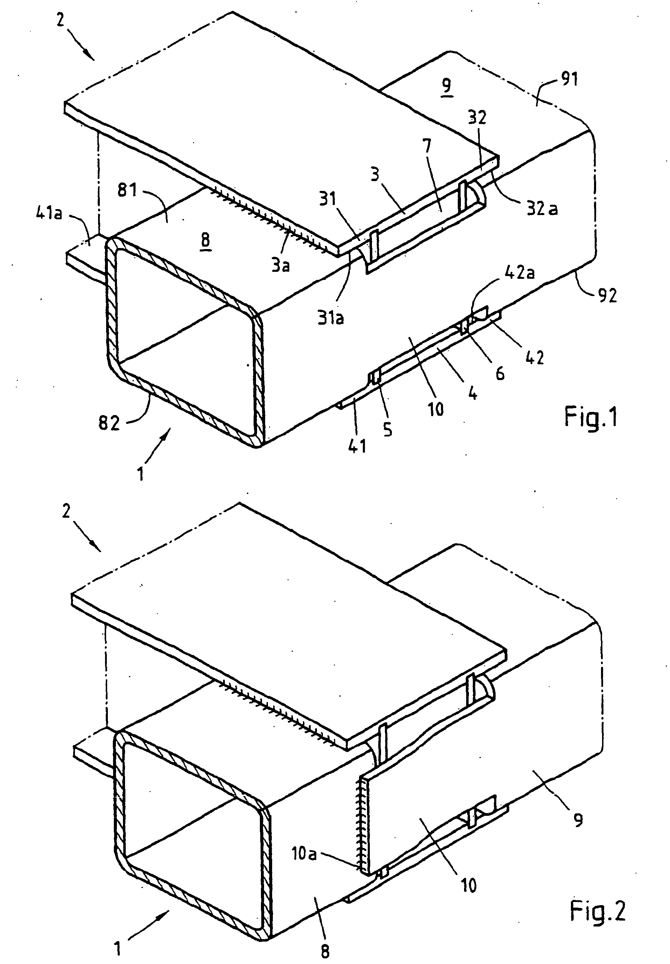

Die in Fig. 1 dargestellte Knotenstruktur besteht aus einem ersten Profil 1, welches als Hohlprofil mit rechteckigem Querschnitt ausgebildet ist, und einem zweiten Profil 2, welches seinerseits aus zwei parallelen, sich gegenüberliegenden Gurten 3, 4 und zwei die Gurte 3, 4 verbindenden, ebenfalls parallel ausgerichteten Stegen 5, 6 besteht, wobei die Gurte 3, 4 mit ihren seitlichen Enden gegenüber dem bzw. den Stegen 5, 6 überstehen und mit diesen Überständen paarweise parallele Flansche 31, 42, 32, 42 bilden. Bei dem zweiten Profil 2 handelt es sich vorzugsweise um ein DAVEX-Profil, bei welchem die beschriebene Querschnittsform schon fertigungsbedingt vorgegeben ist. Das erste Profil 1 ist entlang seines Umfangs bis auf eine Seite durchtrennt, so dass zwei sich gegenüberliegende Profilenden 8, 9 vorliegen, die eine Aussparung 7 begrenzen und nur über einen Verbindungssteg 10 miteinander verbunden sind. In die Aussparung 7 ist das zweite Profil 2 derart eingesteckt, dass die jeweiligen Ober- und Unterseiten 81, 91, 82, 92 der Profilenden 8, 9 formschlüssig an den Innenseiten 31a, 41a, 32a, 42a der sich gegenüberliegenden Flasche 31, 41, 32, 42 des zweiten Profils 2 anliegen. Am äußeren Rand der Flansche 31, 41, 32, 42 ist das zweite Profil 2 über insgesamt vier Schweißnähte 3a, 4a, welche als Linienschweißnähte ausgebildet sind, fest mit den Profilenden 8, 9 des ersten Profils 1 verbunden, wodurch eine einfach gestaltete, hochsteife Knotenstruktur mit den als Schottwände für das Profil 1 wirkenden Stegen 5, 6 gebildet wird.

Als Teil eines Fahrzeugtragrahmens, wobei das erste Profil 1 beispielsweise einen hinteren Längsträger und das zweite Profil 2 einen Querträger bildet, zeichnet sich die erfindungsgemäße Knotenstruktur durch sehr gute Crasheigenschaften aus. Kommt es beispielsweise zu einer sehr starken Krafteinleitung in Längsrichtung'in das den Längsträger bildende erste Profil 1 infolge eines Heckaufpralls, so verliert die Knotenstruktur selbst bei einem Reißen der Linienschweißnähte 3a, 4a nicht ihre Stabilität, da die Profilenden 8, 9 durch die als Schottwände wirkenden Stege 5, 6 des eingesteckten zweiten Profils 2 an einer Längsverschiebung gehindert werden und ein Kollabieren, d. h. eine starke Querschnittsveränderung, der Profilenden 8, 9 sowie deren übermäßige Torsion am Orte der. Knotenstruktur durch die von den Gurten 3, 4 gebildeten Flansche verhindert wird.

Bei der in Fig. 1 dargestellten Ausführungsform der Knotenstruktur ist das erste Profil 1 am Ort der Verbindung nicht vollständig, sondern lediglich bis auf die der Stirnseite des zweiten Profils 2 zugewandten Seite durchtrennt, die einen Verbindungssteg 10 bildet. Das erste Profil 1 weist somit eine durchgehende Faser auf, durch welche die Dauerfestigkeit der Knotenstruktur erhöht wird. Bei einer starken Längsbelastung des zweiten Profils 2 fungiert der Verbindungssteg 10 als Sperre, welche effektiv verhindert, dass das zweite Profil 2 bei einem beispielsweise crashbedingtem Reißen der Schweißnähte 3a, 4a durch die Aussparung 7 des ersten Profils 1 hindurchgeschoben wird.

Gemäß der in Fig. 2 dargestellten Ausführungsform der Knotenstruktur weist das eine Profilende 9 auf der dem zweiten Profil 2 abgewandten Seite einen einen Verbindungssteg 10 bildenden Überstand auf, über den es mit dem anderen Profilende 8 verbunden ist und somit einen Verbindungssteg 10 bildet. Die Verbindung ist wiederum als Linienschweißnaht 10a ausgebildet. Durch diese Anordnung ist die Knotenstruktur bei einer Belastung des zweiten Profils 2 in dessen Längsrichtung, beispielsweise bei einem Seitenaufprall, zusätzlich gesichert.

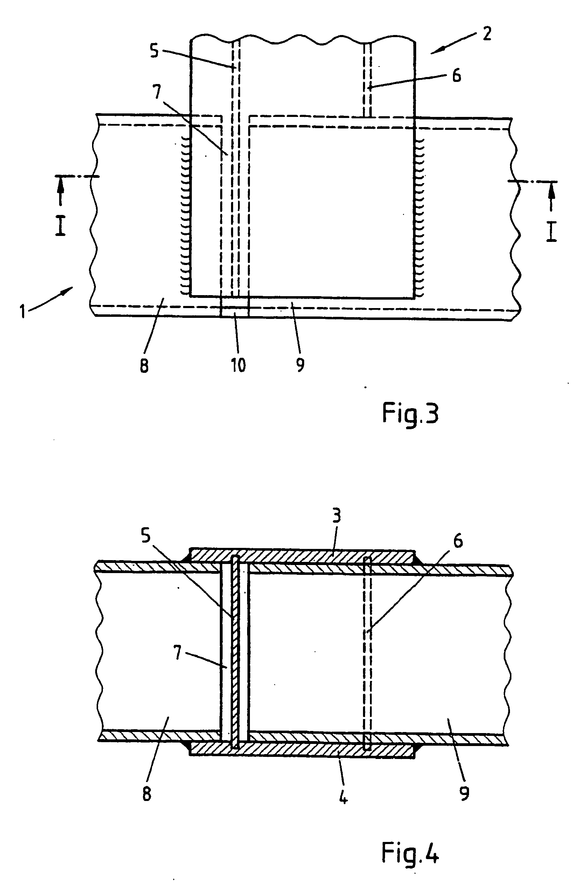

Bei der in Fig. 3 und 4 dargestellten Ausführungsform der erfindungsgemäßen Knotenstruktur ist der eine Steg 6 des zweiten Profils 2 derart längsbeschnitten, dass die Aussparung 7 im ersten Profil 1 wesentlich kleiner gewählt werden kann und somit die Profilenden 8, 9 in wesentlich geringerem Abstand zueinander liegen. Dies ist zwar mit einem höheren Gewicht der Knotenstruktur sowie mit einem höheren Fertigungsaufwand verbunden, sorgt jedoch für eine nennenswerte Erhöhung der Steifigkeit der Knotenstruktur.

## Patentansprüche

1. Knotenstruktur zur Verbindung von zwei Profilen (1, 2), insbesondere in einem Fahrzeugtragrahmen, von denen das erste Profil (1) mindestens zwei ebene, parallele Seiten aufweist und das zweite Profil (2) aus zwei parallelen, sich gegenüberliegenden Gurten (3, 4) und mindestens einem die Gurte (3, 4) verbindenden Steg (5, 6) besteht, wobei die Gurte (3, 4) mit ihren seitlichen Enden gegenüber dem Steg (5, 6) überstehen und mit diesen Überständen paarweise parallele Flansche (31, 41, 32, 42) bilden, und wobei das erste Profil (1) am Ort der Verbindung eine Aussparung (7) aufweist, in die das zweite Profil (2) stirnseitig derart eingesteckt ist, dass die parallelen Seiten der sich gegenüberliegenden, die Aussparung begrenzenden Enden (8, 9) des ersten Profils (1) formschlüssig an den Innenseiten (31a, 41a, 32a, 42a) der sich gegenüberliegenden Flasche (31, 41, 32, 42) des zweiten Profils (2) anliegen und mit diesen verbunden sind,
**dadurch gekennzeichnet, dass**
das erste Profil (1) im Bereich seiner Aussparung (7) an seiner der Stirnseite des eingesteckten zweiten Profils (2) zugewandten Seite einen Verbindungssteg (10) aufweist, wobei der Verbindungssteg (10) die sich gegenüberliegenden, die Aussparung begrenzenden Enden (8, 9) des ersten Profils (1) miteinander verbindet.

2. Knotenstruktur nach Anspruch 1,
**dadurch gekennzeichnet, dass**
das erste Profil (1) am Ort der Aussparung (7) unter Bildung des Verbindungssteges (10) bis auf die der Stirnseite des eingesteckten zweiten Profils (2) zugewandten Seite durchtrennt ist.

3. Knotenstruktur nach Anspruch 1,
**dadurch gekennzeichnet, dass**
bei am Ort der Aussparung (7) vollständig durchtrennten ersten Profil (1) das eine Ende (9) des ersten Profils (1) einen den Verbindungssteg (10) bildenden Überstand aufweist, über den dieses eine Ende (9) mit dem anderen Ende (8) des ersten Profils (1) verbunden ist

4. Knotenstruktur nach einem der Ansprüche 1 bis 3,
**dadurch gekennzeichnet, dass**
das zweite Profil (2) zwei Stege (5, 6) aufweist, von denen der eine (6) längsbeschnitten ist.

5. Knotenstruktur nach einem der Ansprüche 1 bis 4,
**dadurch gekennzeichnet, dass**
die Profile (1, 2) durch Schweißen miteinander verbunden sind.

6. Knotenstruktur nach Anspruch 5,
**dadurch gekennzeichnet, dass**
die Schweißverbindung als Linienschweißnaht (3a, 4a) ausgebildet ist.

7. Knotenstruktur nach einem der Ansprüche 1 bis 6,
**dadurch gekennzeichnet, dass**
das zweite Profil (2) ein DAVEX-Profil ist.

8. Knotenstruktur nach den Ansprüchen 2 und 7,
**dadurch gekennzeichnet, dass**
das zweite Profil (2) als Fahrzeugsitzträger ausgebildet ist.

9. Knotenstruktur nach einem der Ansprüche 1 bis 8,
**dadurch gekennzeichnet, dass**
die Knotenstruktur zusätzlich mit Schalenelementen eingefaßt ist.

10. Knotenstruktur nach Anspruch 9,
**dadurch gekennzeichnet, dass**
die Schalenelemente als Tiefzieh- oder Kantbauteile ausgebildet sind.

## Claims

1. Junction structure for connecting two profiles (1, 2), in particular in a vehicle support frame, the first profile (1) of which has at least two planar, parallel sides and the second profile (2) consists of two parallel, opposite girders (3, 4) and at least one strip (5, 6) connecting the girders (3, 4), whereby the girders (3, 4) with their lateral ends project relative to the strip (5, 6), these projections forming paired parallel flanges (31,41, 32, 42), and whereby the first profile (1) at the location of connection has a recess (7) into which the second profile (2) is inserted on the front side in such a manner that the parallel sides of the opposite ends (8, 9) of the first profile limiting the recess rest in a form fit against the insides (31a, 41a, 32a, 42a) of the opposite flanges (31, 41, 32, 42) of the second profile (2) and are connected thereto, **characterised in that** the first profile (1) has a connecting strip (10) in the vicinity of its recess (7) on its side facing the front of the inserted second profile (2), whereby the connecting strip connects the opposite ends of the first profile limiting the recess.

2. Junction structure according to claim 1, **characterised in that** the first profile (1) while forming the connecting strip (10) is split at the location of the recess (7) except for the side facing the front of the inserted second profile (2).

3. Junction structure according to claim 1, **characterised in that** with the first profile (1) being completely split at the location of the recess (7), the one end (9) of the first profile (1) has a projection forming the connection strip (10), by which this one end (9) is connected to the other end (8) of the first profile (1).

4. Junction structure according to one of claims 1 to 3, **characterised in that** the second profile (2) has two strips (5, 6), one of which (6) is cut lengthwise.

5. Junction structure according to one of claims 1 to 4, **characterised in that** the profiles (1, 2) are joined together by welding.

6. Junction structure according to claim 5, **characterised in that** the weld join is configured as a linear weld seam (3a, 4a).

7. Junction structure according to one of claim 1 to 6, **characterised in that** the second profile (2) is a DAVEX profile.

8. Junction structure according to claims 2 and 7, **characterised in that** the second profile (2) is configured as a vehicle seating support.

9. Junction structure according to one of claims 1 to 8, **characterised in that** the junction structure is additionally enclosed with shell-type elements.

10. Junction structure according to claim 9, **characterised in that** the shell-type elements are configured as deep-drawn or edge components.

## Revendications

1. Structure nodale pour raccorder deux profilés (1, 2), en particulier dans un cadre porteur de véhicule, dont le premier profilé (1) présente au moins deux faces parallèles planes et le second profilé (2) est constitué de deux semelles (3, 4) parallèles opposées l'une à l'autre et d'au moins une barrette (5, 6) raccordant les semelles (3, 4), dans laquelle les semelles (3, 4) dépassent, par leurs extrémités latérales, de la barrette (5, 6) et forment avec ces saillies, par paires, des rebords parallèles (31, 41, 32, 42), et dans laquelle le premier profilé (1) présente à l'endroit du raccordement un évidement (7), dans lequel le second profilé (2) est emboîté côté frontal de sorte que les faces parallèles des extrémités (8, 9) du premier profilé (1) opposées l'une à l'autre et délimitant l'évidement s'appliquent par complémentarité de formes sur les faces internes (31a, 41a, 32a, 42a) des rebords opposés (31, 41, 32, 42) du second profilé (2) et soient raccordées à celles-ci,
**caractérisée en ce que**
le premier profilé (1) présente dans la zone de son évidement (7), sur sa face tournée vers la face frontale du second profilé (2) emboîté, une barrette de raccordement (10), laquelle barrette de raccordement (10) raccorde l'une à l'autre les extrémités (8, 9) du premier profilé (1) opposées l'une à l'autre et délimitant l'évidement.

2. Structure nodale selon la revendication 1,
**caractérisée en ce que**
le premier profilé (1) est sectionné à l'endroit de l'évidement (7) en formant la barrette de raccordement (10), jusqu'à la face tournée vers la face frontale du second profilé emboîté (2).

3. Structure nodale selon la revendication 1,
**caractérisée en ce que**,
dans le cas du premier profilé (1) sectionné complètement à l'endroit de l'évidement (7), la première extrémité (9) du premier profilé (1) présente une saillie formant la barrette de raccordement (10), par le biais de laquelle la première extrémité (9) est raccordée à l'autre extrémité (8) du premier profilé (1).

4. Structure nodale selon l'une quelconque des revendications 1 à 3,
**caractérisée en ce que**
le second profilé (2) présente deux barrettes (5, 6), dont l'une (6) est coupée longitudinalement.

5. Structure nodale selon l'une quelconque des revendications 1 à 4,
**caractérisée en ce que**
les profilés (1, 2) sont raccordés l'un à l'autre par soudage.

6. Structure nodale selon la revendication 5,
**caractérisée en ce que**
le joint soudé se présente sous la forme d'un cordon de soudure linéaire (3a, 4a).

7. Structure nodale selon l'une quelconque des revendications 1 à 6,
**caractérisée en ce que**
le second profilé (2) est un profilé de type DAVEX.

8. Structure nodale selon les revendications 2 et 7,
**caractérisée en ce que**
le second profilé (2) se présente sous la forme d'un support de siège de véhicule.

9. Structure nodale selon l'une quelconque des revendications 1 à 8,
**caractérisée en ce que**
la structure nodale est en outre bordée d'éléments d'enveloppe.

10. Structure nodale selon la revendication 9,
**caractérisée en ce que**
les éléments d'enveloppe se présentent sous la forme de composants emboutis ou de composants à arêtes vives.
